# EUROPÄISCHE PATENTANMELDUNG

(11) **EP 4 250 178 A1**
(43) Veröffentlichungstag der Anmeldung: **27.09.2023**
(21) Anmeldenummer: 22164032.9
(22) Anmeldetag: 24.03.2022
(51) Int. Cl.: G06N 3/02, G06F 21/16, H04L 9/00, H04L 9/40

(54) **VERFAHREN ZUM DIEBSTAHLSCHUTZ VON KÜNSTLICHEN NEURONALEN NETZEN SOWIE SCHUTZSYSTEM**

(71) Anmelder: Siemens Aktiengesellschaft, 80333 München (DE)
(72) Erfinder: TOKIC, Michel, 88069 Tettnang (DE); VON BEUNINGEN, Anja, 99085 Erfurt (DE); SCHARINGER, Boris, 90762 Fürth (DE); STRIXNER, Ferdinand, 81739 München (DE)
(74) Vertreter: Siemens Patent Attorneys

(57) **Zusammenfassung**

Zum Diebstahlschutz eines zum Steuern einer Maschine (M) vorgesehenen neuronalen Netzes (NN) werden neuronale Gewichte (A) des neuronalen Netzes (NN) selektiert. Die selektierten Gewichte (A) werden durch ein digitales Wasserzeichen (WM) markiert, wobei markierte Gewichte (A') sowie Kompensationsgewichte (D) derart erzeugt werden, dass die selektierten Gewichte (A) mittels der Kompensationsgewichte (D) aus den markierten Gewichten (A') rekonstruierbar sind. Erfindungsgemäß werden die Kompensationsgewichte (D) verschlüsselt, und das neuronale Netz (NN) wird mit den markierten Gewichten (A') und den verschlüsselten Kompensationsgewichten (D') zur Benutzung bereitgestellt.
Durch eine Steuereinrichtung (CTL, U1) werden dann
- das bereitgestellte neuronale Netz (NN) empfangen,
- die verschlüsselten Kompensationsgewichte (D') entschlüsselt und damit aus den markierten Gewichten (A') die selektierten Gewichte (A) rekonstruiert, und
- die Maschine (M) mittels des bereitgestellten neuronalen Netzes (NN) und der rekonstruierten selektierten Gewichte (A) gesteuert.

Darüber hinaus werden Gewichte eines vorliegenden neuronalen Netzes (NN) dahingehend geprüft, ob sie das digitale Wasserzeichen (WM) enthalten, und abhängig davon wird ein Alarmsignal (AS) ausgegeben.

## Beschreibung

Komplexe Maschinen, wie z.B. Roboter, Motoren, Fertigungsanlagen, Werkzeugmaschinen, Gasturbinen, Windturbinen oder Kraftfahrzeuge benötigen für einen produktiven und stabilen Betrieb in der Regel komplexe Steuerungs- und Überwachungsverfahren. Zu diesem Zweck werden in zeitgemäßen Maschinensteuerungen häufig Techniken des maschinellen Lernens eingesetzt. So kann insbesondere ein künstliches neuronales Netz als Steuermodell darauf trainiert werden, eine Maschine in optimierter Weise zu steuern.

Ein Training von neuronalen Netzen zum Steuern von komplexen Maschinen erweist sich indessen häufig als sehr aufwendig. So werden in der Regel große Mengen von Trainingsdaten, erhebliche Rechenressourcen sowie viel spezifisches Expertenwissen benötigt. Mithin besteht ein großes Interesse daran, trainierte neuronale Netze oder eine darin enthaltene Trainingsinformation gegen eine unkontrollierte oder unberechtigte Verbreitung oder Verwendung zu schützen und/oder Diebstähle zu erkennen.

Es ist bekannt, neuronale Netze oder durch neuronale Netze zu verarbeitende Daten durch kryptologische oder homomorphe Verfahren zu schützen. Ein derartiges Verfahren ist beispielsweise aus der Internet-Publikation https://arxiv.org/abs/2005.06043, "Serdab: An IoT Framework for Partitioning Neural Networks Computation across Multiple Enclaves" von Tarek Elgamal und Klara Nahrstedt (abgerufen am 28. Februar 2022) bekannt.

Es ist weiterhin bekannt, zur Diebstahlerkennung von neuronalen Netzen ein eindeutiges digitales Wasserzeichen in neuronale Gewichte eines neuronalen Netzes einzutrainieren. Anhand des Wasserzeichens kann dann ein vorliegendes neuronales Netz daraufhin geprüft werden, ob es vom Verwender des Wasserzeichens stammt. Das vorstehende Verfahren setzt allerdings einen Zugriff auf das Training des zu schützenden neuronalen Netzes voraus. Von Dritten trainierte neuronale Netze können so nicht ohne Weiteres markiert werden.

Es ist Aufgabe der vorliegenden Erfindung, ein Verfahren zum Diebstahlschutz eines neuronalen Netzes sowie ein entsprechendes Schutzsystem anzugeben, die breiter anwendbar sind.

Gelöst wird diese Aufgabe durch ein Verfahren mit den Merkmalen des Patentanspruchs 1, durch ein Schutzsystem mit den Merkmalen des Patentanspruchs 8, durch ein Computerprogrammprodukt mit den Merkmalen des Patentanspruchs 9 sowie durch ein computerlesbares Speichermedium mit den Merkmalen des Patentanspruches 10.

Zum Diebstahlschutz eines zum Steuern einer Maschine vorgesehenen neuronalen Netzes werden Gewichte von Verbindungen zwischen Neuronen des neuronalen Netzes selektiert. Die selektierten Gewichte werden durch ein digitales Wasserzeichen markiert, wobei markierte Gewichte sowie Kompensationsgewichte derart erzeugt werden, dass die selektierten Gewichte mittels der Kompensationsgewichte aus den markierten Gewichten rekonstruierbar sind. Erfindungsgemäß werden die Kompensationsgewichte verschlüsselt, und das neuronale Netz wird mit den markierten Gewichten und den verschlüsselten Kompensationsgewichten zur Benutzung bereitgestellt. Durch eine Steuereinrichtung werden dann
- das bereitgestellte neuronale Netz empfangen,
- die verschlüsselten Kompensationsgewichte entschlüsselt und damit aus den markierten Gewichten die selektierten Gewichte rekonstruiert, und
- die Maschine mittels des bereitgestellten neuronalen Netzes und der rekonstruierten selektierten Gewichte gesteuert. Darüber hinaus werden Gewichte eines vorliegenden neuronalen Netzes dahingehend geprüft, ob sie das digitale Wasserzeichen enthalten, und abhängig davon wird ein Alarmsignal ausgegeben.

Zur Durchführung des erfindungsgemäßen Verfahrens sind ein Schutzsystem, ein Computerprogrammprodukt sowie ein computerlesbares, vorzugsweise nichtflüchtiges Speichermedium vorgesehen.

Das erfindungsgemäße Verfahren sowie das erfindungsgemäße Schutzsystem können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Ein Vorteil der Erfindung ist insbesondere darin zu sehen, dass zum Schutz eines neuronalen Netzes kein Zugriff auf dessen Trainingsprozess erforderlich ist. Stattdessen können auch fertig trainierte neuronalen Netze insbesondere auch von Drittanbietern gegen unkontrollierte Verbreitung geschützt werden. Ein Neutraining ist hierzu in der Regel nicht erforderlich.

Ein weiterer Vorteil ist darin zu sehen, dass eine Genauigkeit des neuronalen Netzes durch das digitale Wasserzeichen in der Regel nicht beeinträchtigt wird. Insbesondere ist das erfindungsgemäße Verfahren nicht darauf beschränkt, das digitale Wasserzeichen nur niederwertigen Bits der neuronalen Gewichte aufzuprägen. Insofern die niederwertigen Bits häufig nur geringen Einfluss auf ein Ausgabesignal des neuronalen Netzes haben, könnte ein unberechtigter Verwender ein solches digitales Wasserzeichen unter Inkaufnahme verhältnismäßig geringer Ungenauigkeiten verändern und so den Wasserzeichenschutz unterlaufen.

Vorteilhafte Ausführungsformen und Weiterbildungen der Erfindung sind in den abhängigen Ansprüchen angegeben.

Gemäß einer vorteilhaften Ausführungsform der Erfindung können vor der Bereitstellung des neuronalen Netzes ein erster Hashwert der markierten Gewichte ermittelt und mindestens eines der Kompensationsgewichte vor deren Verschlüsselung durch den ersten Hashwert in reversibler Weise modifiziert werden. Weiterhin können durch die Steuereinrichtung ein zweiter Hashwert der markierten Gewichte des bereitgestellten neuronalen Netzes ermittelt und das mindestens eine modifizierte Kompensationsgewicht nach der Entschlüsselung mittels des zweiten Hashwerts rekonstruiert werden. Insbesondere können auf diese Weise alle Kompensationsgewichte modifiziert und rekonstruiert werden. Zur Modifikation kann der erste Hashwert z.B. zu dem mindestens einen Kompensationsgewicht addiert oder davon subtrahiert werden. Entsprechend kann zur Rekonstruktion der zweite Hashwert insbesondere von dem mindestens einen modifizierten Kompensationsgewicht subtrahiert oder dazu addiert werden. Der erste und der zweite Hashwert können beispielsweise durch eine MD5-Hashfunktion, eine SHA-Hashfunktion oder eine andere Hashfunktion ermittelt werden, deren Rückgabewerte im Wesentlichen keine Rückschlüsse auf die Eingabewerte, hier die markierten Gewichte zulassen oder derartige Rückschlüsse zumindest sehr erschweren. Durch die vorstehende Ausgestaltung der Erfindung kann in vielen Fällen effektiv verhindert werden, dass das digitale Wasserzeichen und damit die markierten Gewichte durch einen unberechtigten Anwender ohne Beeinträchtigung der Funktionsfähigkeit des neuronalen Netzes verändert werden. Eine auch leichte Veränderung der markierten Gewichte des bereitgestellten neuronalen Netzes würde das mindestens eine rekonstruierte Kompensationsgewicht in vielen Fällen so stark verändern, dass die selektierten Gewichte nur ungenau rekonstruiert werden könnten. Dies würde jedoch eine Funktionsfähigkeit oder Genauigkeit des neuronalen Netzes in der Regel stark beeinträchtigten.

Weiterhin können zur Erzeugung der Kompensationsgewichte die selektierten Gewichte mit den markierten Gewichten mittels einer Subtraktion, mittels einer Addition oder mittels einer anderen numerischen Operation verknüpft werden. Entsprechend können zur Rekonstruktion der selektierten Gewichte die markierten Gewichte mit den Kompensationsgewichten mittels einer Addition, mittels einer Subtraktion oder mittels einer anderen inversen numerischen Operation verknüpft werden. Alternativ oder zusätzlich können zur Erzeugung der Kompensationsgewichte eine oder mehrere andere mathematische Operationen und zur Rekonstruktion der selektierten Gewichte eine oder mehrere dazu komplementäre mathematische Operationen verwendet werden.

Nach einer weiteren vorteilhaften Ausführungsform der Erfindung können die selektierten Gewichte eine Verbindungen zwischen einer ersten und einer zweiten neuronalen Schicht des neuronalen Netzes gewichtende Gewichtsmatrix umfassen. Dabei kann ein jeweiliges Matrixelement in der i-ten Zeile und der j-ten Spalte der Gewichtsmatrix ein jeweiliges Gewicht einer Verbindung zwischen einem j-ten Neuron der ersten neuronalen Schicht und einem i-ten Neuron der zweiten neuronalen Schicht darstellen. Die markierten Gewichte können entsprechend eine durch das digitale Wasserzeichen markierte Gewichtsmatrix umfassen. Ebenso können die Kompensationsgewichte eine Kompensationsmatrix umfassen, mittels der die selektierte Gewichtsmatrix aus der markierten Gewichtsmatrix rekonstruierbar ist. Derartige Gewichtsmatrizen bzw. Kompensationsmatrizen lassen sich in der Regel numerisch sehr effizient handhaben.

Nach einer weiteren vorteilhaften Ausführungsform kann zur Verschlüsselung der Kompensationsgewichte ein der Steuereinrichtung zugeordneter öffentlicher Schlüssel verwendet werden. Entsprechend kann zur Entschlüsselung der verschlüsselten Kompensationsgewichte ein der Steuereinrichtung zugeordneter privater Schlüssel verwendet werden. Auf diese Weise kann die Weitergabe des neuronalen Netzes durch eine etablierte Infrastruktur geschützt werden.

Insbesondere kann die Entschlüsselung der verschlüsselten Kompensationsgewichte mittels eines Trusted-Platform-Moduls der Steuereinrichtung oder in einer anderen sogenannten Secure-Computing-Enclave erfolgen.

Nach einer weiteren vorteilhaften Ausführungsform der Erfindung kann das neuronale Netz mit den markierten Gewichten und den verschlüsselten Kompensationsgewichten in einem Softwarecontainer, insbesondere in einem schlüssel- oder signaturgeschützten Softwarecontainer gekapselt werden. Der Softwarecontainer kann vorzugsweise so ausgestaltet sein, dass das neuronale Netz, die markierten Gewichte und/oder die verschlüsselten Kompensationsgewichte bei einer Auftrennung des Softwarecontainers ihre Funktion verlieren.

Ein Ausführungsbeispiel der Erfindung wird nachfolgend anhand der Zeichnung näher erläutert. Dabei veranschaulichen jeweils in schematischer Darstellung:
- Figur 1: eine Steuerung einer Maschine mittels eines künstlichen neuronalen Netzes und
- Figur 2: ein erfindungsgemäßes Schutzsystem für ein neuronales Netz.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

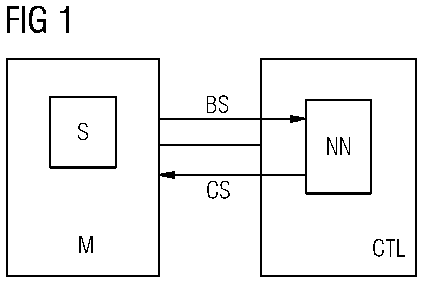

Figur 1 veranschaulicht eine Steuerung einer Maschine M mittels eines trainierten künstlichen neuronales Netzes NN in schematischer Darstellung. Die Maschine M kann hierbei insbesondere ein Roboter, ein Motor, eine Fertigungsanlage, eine Werkzeugmaschine, ein Verkehrsleitsystem, eine Turbine, eine Verbrennungskraftmaschine und/oder ein Kraftfahrzeug sein oder eine solche Maschine umfassen.

Die Maschine M wird durch eine an diese gekoppelte Steuereinrichtung CTL gesteuert. Letztere ist in Figur 1 extern zur Maschine M dargestellt. Alternativ dazu kann die Steuereinrichtung CTL auch ganz oder teilweise in die Maschine M integriert sein.

Die Steuereinrichtung CTL umfasst das trainierte neuronale Netz NN und nutzt dieses zum Steuern der Maschine M. Das neuronale Netz NN kann dabei insbesondere zum Erzeugen von Steuersignalen CS für die Maschine M, zur Vorhersage von Betriebszuständen der Maschine M, zur Vorhersage von Umgebungsbedingungen und/oder zur Vorhersage von wahrscheinlichen Fehlfunktionen oder Ausfällen der Maschine M verwendet werden. Für das vorliegende Ausführungsbeispiel sei angenommen, dass das neuronale Netz zur Erzeugung von Steuersignalen CS für die Maschine M verwendet wird.

Die Maschine M weist eine Sensorik S auf, durch die fortlaufend Betriebsparameter der Maschine M sowie andere Messwerte, z.B. aus einer Umgebung der Maschine M gemessen werden. Die von der Sensorik S ermittelten Messwerte werden zusammen mit anderen Betriebsdaten der Maschine M in Form von Betriebssignalen BS von der Maschine M zur Steuereinrichtung CTL übermittelt.

Die Betriebssignale BS umfassen insbesondere Sensordaten und/oder Messwerte der Sensorik S, Steuersignale der Maschine M und/oder Zustandssignale der Maschine M. Die Zustandssignale spezifizieren hierbei jeweils einen Betriebszustand der Maschine M oder von einer oder mehreren ihrer Komponenten, vorzugsweise im Zeitverlauf.

Insbesondere können durch die Betriebssignale BS eine Leistung, eine Drehzahl, ein Drehmoment, eine Bewegungsgeschwindigkeit, eine ausgeübte oder einwirkende Kraft, eine Temperatur, ein Druck, ein aktueller Ressourcenverbrauch, vorhandene Ressourcen, ein Schadstoffausstoß, Vibrationen, ein Verschleiß und/oder eine Belastung der Maschine M oder von Komponenten der Maschine M quantifiziert werden. Vorzugsweise werden die Betriebssignale BS jeweils durch einen oder mehrere numerische Datenvektoren und/oder durch eine Zeitreihe von Signalwerten oder Datenvektoren dargestellt und in dieser Form zur Steuereinrichtung CTL übermittelt.

Das neuronale Netz NN ist im vorliegenden Ausführungsbeispiel darauf trainiert, anhand von Betriebssignalen BS der Maschine M Ausgabesignale CS auszugeben, mittels derer die Maschine M in optimierter Weise gesteuert werden kann. Zum Training eines solchen neuronalen Netzes NN steht eine Vielzahl effizienter Verfahren des maschinellen Lernens zur Verfügung, insbesondere Verfahren des bestärkenden Lernens, das häufig auch als Reinforcement-Learning bezeichnet wird. Auf das Training des neuronalen Netzes NN wird unten noch näher eingegangen.

Das neuronale Netz NN kann insbesondere ein rekurrentes neuronales Netz, ein faltendes neuronales Netz, ein Perzeptron, ein bayessches neuronales Netz, einen Autoencoder, einen variationalen Autoencoder, einen Gaußprozess, eine Deep-Learning-Architektur, eine Support-Vektor-Maschine, ein datengetriebenes Regressionsmodell, einen k-nächste-Nachbarn-Klassifikator, ein physikalisches Modell und/oder einen Entscheidungsbaum umfassen.

Zum Steuern der Maschine M werden die Betriebssignale BS oder daraus abgeleitete Betriebsdaten der Maschine M in das trainierte neuronale Netz NN als Eingabesignale eingespeist. Aus den Eingabesignalen werden durch das trainierte neuronale Netz NN Steuersignale CS als Ausgabesignale abgeleitet. Die Steuersignale CS oder daraus abgeleitete Signale werden schließlich zur Maschine M übermittelt, um diese in optimierter Weise zu steuern.

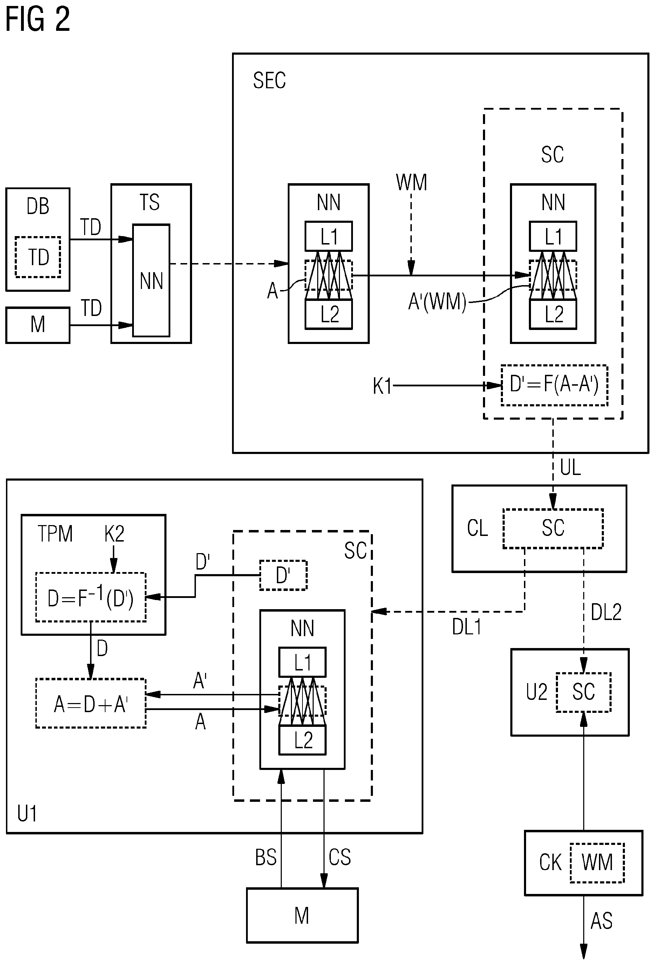

Figur 2 veranschaulicht ein erfindungsgemäßes Schutzsystem für ein künstliches neuronales Netz, hier NN.

Das zu schützende neuronale Netz NN wird vorab durch ein Verfahren des bestärkenden Lernens in einem Trainingssystem TS darauf trainiert, anhand von Betriebssignalen der Maschine M Ausgabesignale auszugeben, mittels derer die Maschine M in optimierter Weise gesteuert werden kann. Das Training wird anhand einer großen Menge von Trainingsdaten TD ausgeführt, die aus einer Datenbank DB, von der Maschine M, von einer dazu ähnlichen Maschine und/oder von einer Simulation der Maschine M stammen.

Unter einem Training sei allgemein eine Optimierung einer Abbildung von Eingabesignalen eines Maschinenlernmoduls, hier des neuronalen Netzes NN, auf dessen Ausgabesignale verstanden. Diese Abbildung wird nach vorgegebenen Kriterien während einer Trainingsphase optimiert. Als Kriterium können insbesondere bei Steuermodellen, wie dem neuronalen Netz NN ein Erfolg einer Steueraktion oder bei Prädiktionsmodellen ein Prädiktionsfehler herangezogen werden. Durch das Training können beispielsweise Vernetzungsstrukturen von Neuronen des neuronalen Netzes NN und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden.

Für derartige Optimierungsprobleme auf dem Gebiet des maschinellen Lernens ist eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Zum Training des neuronalen Netzes NN werden diesem in den Trainingsdaten TD enthaltene Betriebssignale der Maschine M als Eingabesignale zugeführt. Im Zuge des Trainings werden dann neuronale Gewichte des neuronalen Netzes NN, vorzugsweise durch eines der vorstehend erwähnten Optimierungsverfahren derart eingestellt, dass die Maschine M mittels der vom neuronalen Netz NN aus den Eingabesignalen abgeleiteten Ausgabesignale in optimierter Weise gesteuert wird. Zur Bewertung einer optimierten Steuerung der Maschine M kann z.B. eine Performanz der Maschine M, z.B. eine Leistung, ein Wirkungsgrad etc. gemessen oder simulativ ermittelt und als Optimierungskriterium verwendet werden.

Das vorstehend beschriebene Training des neuronalen Netzes NN kann auch außerhalb des Schutzsystems von einem Drittanbieter durchgeführt werden. Die Erfindung erlaubt es somit, auch fertig trainierte neuronale Netze zu schützen.

Das trainierte neuronale Netz NN wird nach dem Training vom Trainingssystem TS zu einem Sicherungssystem SEC übermittelt. Das Sicherungssystem SEC dient dem Zweck, das trainierte neuronale Netz NN gegen unkontrollierte oder unberechtigte Verbreitung zu schützen. Hierzu wird dem trainierten neuronalen Netz NN unter anderem ein eindeutiges digitales Wasserzeichen WM aufgeprägt, anhand dessen sich das neuronale Netz NN und/oder seine Herkunft später identifizieren lassen.

Das digitale Wasserzeichen WM kann vorgegeben sein und beispielsweise einen Ersteller des neuronalen Netzes oder das Sicherungssystem SEC eindeutig identifizieren. Alternativ oder zusätzlich kann das aufzuprägende digitale Wasserzeichen dynamisch erzeugt werden, um so das neuronale Netz NN beispielweise durch eine Seriennummer oder eine andere Information zu kennzeichnen. Als digitales Wasserzeichen kann insbesondere ein Bitstring vorgesehen sein.

Durch das Sicherungssystem SEC werden zunächst neuronale Gewichte von Verbindungen zwischen Neuronen des trainierten neuronalen Netzes NN selektiert, denen das digitale Wasserzeichen aufgeprägt werden soll. Hierzu wird im vorliegenden Ausführungsbeispiel eine Gewichtsmatrix A selektiert, durch die Verbindungen zwischen einer ersten neuronalen Schicht L1 und einer zweiten neuronalen Schicht L2 des trainierten neuronalen Netzes NN gewichtet werden. Die das digitale Wasserzeichen WM aufnehmenden neuronalen Gewichte werden damit in Form der Gewichtsmatrix A selektiert. Dabei stellt ein jeweiliges Matrixelement A(i,j) der Gewichtsmatrix A ein jeweiliges Gewicht einer Verbindung zwischen einem j-ten Neuron der ersten neuronalen Schicht L1 und einem i-ten Neuron der zweiten neuronalen Schicht L2 dar.

Alternativ dazu können auch mehrere Gewichtsmatrizen des trainierten neuronalen Netzes NN selektiert werden, um ihnen ein digitales Wasserzeichen aufzuprägen.

Der selektierten Gewichtsmatrix A des trainierten neuronalen Netzes NN wird das digitale Wasserzeichen WM durch das Sicherungssystem SEC aufgeprägt, wodurch eine markierte Gewichtsmatrix A' entsteht. Durch die markierte Gewichtsmatrix A' ist dann auch das neuronale Netz NN durch das Wasserzeichen WM markiert. Vorzugsweise wird die Gewichtsmatrix A durch das digitale Wasserzeichen WM so verändert, dass das resultierende neuronale Netz NN mit der markierten Gewichtsmatrix A' nicht mehr bestimmungsgemäß ausführbar ist oder zumindest sehr ungenau wird. Insbesondere kann die Gewichtsmatrix A auch durch das digitale Wasserzeichen WM ersetzt werden, d.h. A' = WM, sofern ein Datenformat des digitalen Wasserzeichens WM mit einem Datenformat der Gewichtsmatrix A kompatibel ist.

Weiterhin wird durch das Sicherungssystem SEC eine Kompensationsmatrix D generiert, mittels der die ursprüngliche Gewichtsmatrix A wieder aus der markierten Gewichtsmatrix A' rekonstruierbar ist. Im vorliegenden Ausführungsbeispiel wird die Kompensationsmatrix D ermittelt gemäß D = A-A'. Die Gewichtsmatrix A kann damit auf einfache Weise wieder rekonstruiert werden gemäß A = D+A'.

Darüber hinaus wird die Kompensationsmatrix D durch das Sicherungssystem SEC verschlüsselt, wodurch eine verschlüsselte Kompensationsmatrix D' entsteht. Zur Verschlüsselung wird im vorliegenden Ausführungsbeispiel ein öffentlicher Schlüssel K1 eines nutzungsberechtigten Anwenders des trainierten neuronalen Netzes NN verwendet. Der öffentliche Schlüssel K1 ist einer Steuereinrichtung U1 des nutzungsberechtigten Anwenders zugeordnet, in der auch ein zugehöriger privater Schlüssel K2 des berechtigten Anwenders zugriffsgeschützt gespeichert ist. Mittels des öffentlichen Schlüssels K1 wird die Kompensationsmatrix D durch eine Verschlüsselungsfunktion F in die verschlüsselte Kompensationsmatrix D' transformiert.

Vor einer Weitergabe des wasserzeichenmarkierten neuronalen Netzes NN wird dieses zusammen mit der verschlüsselten Kompensationsmatrix D' durch das Sicherungssystem SEC in einem Softwarecontainer SC gekapselt. Insofern das gekapselte neuronale Netz NN anstelle der ursprünglichen Gewichtsmatrix A die markierte Gewichtsmatrix A' enthält, ist die ursprüngliche Gewichtsmatrix A nicht im Softwarecontainer SC enthalten.

Die Kapselung erfolgt vorzugsweise schlüssel- und/oder signaturgeschützt. Vorzugsweise ist der Softwarecontainer SC so ausgestaltet, dass das neuronale Netz NN und/oder die verschlüsselte Kompensationsmatrix D' bei einer Auftrennung des Softwarecontainers SC ihre Funktionen verlieren.

Der Softwarecontainer SC kann anschließend an Anwender weitergegeben werden. Zu diesem Zweck wird der Softwarecontainer SC vom Sicherungssystem SEC durch einen Upload UL in eine Cloud CL, insbesondere in einen App-Store der Cloud CL übertragen.

Aus der Cloud CL oder ihrem App-Store wird der Softwarecontainer SC im vorliegenden Ausführungsbeispiel einerseits durch einen ersten Download DL1 zur Steuereinrichtung U1 des nutzungsberechtigten Anwenders und andererseits durch einen zweiten Download DL2 zu einem System U2 eines zweiten Anwenders heruntergeladen.

Für das vorliegende Ausführungsbeispiel sei angenommen, dass der nutzungsberechtigte Anwender die Maschine M mit Hilfe des trainierten neuronalen Netzes NN durch seine Steuereinrichtung U1 bestimmungsgemäß steuern möchte. Im Unterschied dazu möchte der zweite Anwender auf seinem System U2 das trainierte neuronale Netz NN in unberechtigter Weise verwenden.

Zur Nutzung des trainierten neuronalen Netzes NN durch die Steuereinrichtung U1 wird die verschlüsselte Kompensationsmatrix D' aus dem Softwarecontainer SC ausgelesen und zu einem Trusted-Platform-Modul TPM der Steuereinrichtung U1 übermittelt. Im Trusted-Platform-Modul TPM ist der private Schlüssel K2 des nutzungsberechtigen Anwenders zugriffsgeschützt hinterlegt. Mittels des privaten Schlüssels K2 wird die verschlüsselte Kompensationsmatrix D' durch das Trusted-Platform-Modul TPM entschlüsselt. Hierbei wird die verschlüsselte Kompensationsmatrix D' mittels einer zur Verschlüsselungsfunktion F inversen Entschlüsselungsfunktion F⁻¹ in die ursprüngliche Kompensationsmatrix D transformiert. Die entschlüsselte Kompensationsmatrix D wird dann vom Trusted-Platform-Modul TPM ausgegeben.

Weiterhin wird durch die Steuereinrichtung U1 die markierte Gewichtsmatrix A' aus dem Softwarecontainer SC ausgelesen und zur entschlüsselten Kompensationsmatrix D addiert, um so die ursprüngliche Gewichtsmatrix A zu rekonstruieren gemäß A = D+A'.

Anschließend ersetzt die Steuereinrichtung U1 die markierte Gewichtsmatrix A' im trainierten neuronalen Netz NN durch die rekonstruierte Gewichtsmatrix A. Auf diese Weise wird das neuronale Netz NN wieder in den vom Trainingssystem TS generierten, optimierten und funktionsfähigen Zustand gebracht. Zum Steuern der Maschine M werden von der Steuereinrichtung U1 aktuelle Betriebssignale BS der Maschine M empfangen und in das rekonstruierte neuronale Netz NN als Eingabesignale eingespeist. Aus den Betriebssignalen BS werden dann durch das trainierte neuronale Netz NN Steuersignale CS als Ausgabesignale abgeleitet. Die Steuersignale CS oder daraus abgeleitete Signale werden schließlich zur Maschine M übermittelt, um diese - wie vom nutzungsberechtigten Anwender gewünscht - in optimierter Weise zu steuern.

Anders als der nutzungsberechtige Anwender kann der zweite Anwender das im Softwarecontainer SC enthaltene neuronale Netz NN im System U2 nicht oder nur eingeschränkt nutzen, da ihm der Schlüssel K2 nicht zur Verfügung steht, um die Gewichtsmatrix A zu rekonstruieren. Insofern letztere durch das digitale Wasserzeichen WM gegebenenfalls stark verändert wurde, ist zu erwarten, dass das markierte neuronale Netz NN keine verwendbaren oder zumindest keine optimierten Steuersignale ausgibt. Auf diese Weise ist das markierte neuronale Netz NN gegen eine unberechtigte Verwendung bzw. gegen Diebstahl geschützt.

Darüber hinaus kann das markierte neuronale Netz NN und/oder seine Herkunft anhand seines aufgeprägten digitalen Wasserzeichens WM identifiziert werden. Auf diese Weise kann ein Diebstahl des markierten neuronalen Netzes NN erkannt werden.

Zum Zweck der Diebstahlerkennung wird das neuronale Netz NN des unberechtigten Anwenders mittels einer Prüfeinrichtung CK auf ein Vorhandensein des digitalen Wasserzeichens WM geprüft. Im vorliegenden Ausführungsbeispiel werden hierzu eine oder mehrere Gewichtsmatrizen des vorliegenden neuronalen Netzes NN dahingehend geprüft, ob sie das digitale Wasserzeichen WM enthalten. Zur Prüfung kann durch die Prüfeinrichtung CK insbesondere ein Mustervergleich zwischen einer Gewichtsmatrix des vorliegenden neuronalen Netzes NN und dem digitalen Wasserzeichen WM durchgeführt werden. Als Kriterium für ein Vorhandensein des Wasserzeichens WM kann dabei eine Übereinstimmung, eine näherungsweise Übereinstimmung oder eine Ähnlichkeit der verglichenen Muster herangezogen werden. Insbesondere kann ein ggf. gewichteter euklidischer Abstand zwischen Datenvektoren ermittelt werden, durch die die verglichenen Muster repräsentiert werden. Ein Vorhandensein des digitalen Wasserzeichens WM kann z.B. dann signalisiert werden, wenn der euklidische Abstand einen vorgegebenen Schwellwert unterschreitet.

Infolge einer Erkennung des digitalen Wasserzeichens WM wird durch die Prüfeinrichtung CK ein Alarmsignal AS mittels eines Alarmgebers ausgegeben. Das Alarmsignal AS kann an einen Ersteller des neuronalen Netzes NN, an das Trainingssystem TS und/oder an das Sicherungssystem SEC übermittelt werden, um die betreffende Stelle darüber zu informieren, dass ein vorliegendes neuronales Netz möglicherweise unberechtigt verwendet oder in Verkehr gebracht wurde.

Insofern die markierte Gewichtmatrix A' des markierten neuronalen Netzes NN nicht verschlüsselt ist, kann das Vorhandensein des digitalen Wasserzeichens WM auf einfache Weise von verschiedenen Stellen überprüft werden, ohne auf einen Schlüssel oder auf eine andere Sicherheitsbeziehung angewiesen zu sein.

Um zu vermeiden oder zumindest zu erschweren, dass das digitale Wasserzeichen WM und damit die markierte Gewichtsmatrix A' durch den unberechtigten Anwender ohne Beeinträchtigung der Funktionsfähigkeit des neuronalen Netzes NN verändert wird, kann durch das Sicherungssystem SEC zusätzlich ein Hashwert der markierten Gewichtsmatrix A' ermittelt werden. Mit diesem Hashwert kann das Sicherungssystem SEC die Kompensationsmatrix D vor ihrer Verschlüsselung modifizieren, z.B. indem der Hashwert zu allen Matrixelementen der Kompensationsmatrix D addiert wird. Nach der Verschlüsselung der so modifizierten Kompensationsmatrix kann schließlich das neuronale Netz NN zusammen mit der verschlüsselten modifizierten Kompensationsmatrix D' im Softwarecontainer SC gekapselt und bereitgestellt werden.

Die Steuereinrichtung U1 des nutzungsberechtigen Anwenders kann dann ebenfalls einen Hashwert der markierten Gewichtsmatrix A' berechnen. Sofern die markierte Gewichtsmatrix A' nicht verändert wurde, sollte der von der Steuereinrichtung U1 berechnete Hashwert mit dem vom Sicherungssystem SEC berechneten Hashwert übereinstimmen. Damit kann die Steuereinrichtung U1 aus der entschlüsselten modifizierten Kompensationsmatrix mittels des erhaltenen Hashwerts wieder die ursprüngliche Kompensationsmatrix D ermitteln, z.B. indem der erhaltene Hashwert von allen Matrixelementen der entschlüsselten modifizierten Kompensationsmatrix subtrahiert wird. Mittels der Kompensationsmatrix D kann die Steuereinrichtung U1 schließlich, wie oben beschrieben, das trainierte neuronale Netz NN rekonstruieren und bestimmungsgemäß verwenden.

Sofern dagegen das digitale Wasserzeichen WM und damit die markierte Gewichtsmatrix A' verändert wurde, ist davon auszugehen, dass sich der Hashwert der markierten Gewichtsmatrix A' erheblich verändert. In einem solchen Fall lassen sich die Kompensationsmatrix D und damit die Gewichtsmatrix A meist nur mit hohen Genauigkeitseinbußen rekonstruieren, so dass die Funktionsfähigkeit des bereitgestellten neuronalen Netzes NN in der Regel stark beeinträchtigt wird.

## Patentansprüche

1. Computerimplementiertes Verfahren zum Diebstahlschutz eines zum Steuern einer Maschine (M) vorgesehenen neuronalen Netzes (NN), wobei
a) Gewichte (A) von Verbindungen zwischen Neuronen des neuronalen Netzes (NN) selektiert werden,
b) die selektierten Gewichte (A) durch ein digitales Wasserzeichen (WM) markiert werden, wobei markierte Gewichte (A') sowie Kompensationsgewichte (D) derart erzeugt werden, dass die selektierten Gewichte (A) mittels der Kompensationsgewichte (D) aus den markierten Gewichten (A') rekonstruierbar sind,
c) die Kompensationsgewichte (D) verschlüsselt werden,
d) das neuronale Netz (NN) mit den markierten Gewichten (A') und den verschlüsselten Kompensationsgewichten (D') zur Benutzung bereitgestellt wird,
e) durch eine Steuereinrichtung (CTL, U1)
- das bereitgestellte neuronale Netz (NN) empfangen wird,
- die verschlüsselten Kompensationsgewichte (D') entschlüsselt und damit aus den markierten Gewichten (A') die selektierten Gewichte (A) rekonstruiert werden, und
- die Maschine (M) mittels des bereitgestellten neuronalen Netzes (N) und der rekonstruierten selektierten Gewichte (A) gesteuert wird, und
f) Gewichte (A') eines vorliegenden neuronalen Netzes (NN) dahingehend geprüft werden, ob sie das digitale Wasserzeichen (WM) enthalten, und abhängig davon ein Alarmsignal (AS) ausgegeben wird.

2. Verfahren nach Anspruch 1, **dadurch gekennzeichnet,**
**dass** vor der Bereitstellung des neuronalen Netzes (NN)
- ein erster Hashwert der markierten Gewichte (A') ermittelt wird und
- mindestens eines der Kompensationsgewichte (D) vor deren Verschlüsselung durch den ersten Hashwert in reversibler Weise modifiziert wird, und
**dass** durch die Steuereinrichtung (CTL, U1)
- ein zweiter Hashwert der markierten Gewichte (A') des bereitgestellten neuronalen Netzes (NN) ermittelt wird, und
- das mindestens eine modifizierte Kompensationsgewicht nach der Entschlüsselung mittels des zweiten Hashwerts rekonstruiert wird.

3. Verfahren nach einem der vorhergehenden Ansprüche, **dadurch gekennzeichnet,**
**dass** zur Erzeugung der Kompensationsgewichte (D) die selektierten Gewichte (A) mit den markierten Gewichten (A') mittels einer Subtraktion, mittels einer Addition oder mittels einer anderen numerischen Operation verknüpft werden, und dass zur Rekonstruktion der selektierten Gewichte (A) die markierten Gewichte (A') mit den Kompensationsgewichten (D) mittels einer Addition, mittels einer Subtraktion oder mittels einer anderen inversen numerischen Operation verknüpft werden.

4. Verfahren nach einem der vorhergehenden Ansprüche, **dadurch gekennzeichnet,**
**dass** die selektierten Gewichte eine Verbindungen zwischen einer ersten (L1) und einer zweiten (L2) neuronalen Schicht des neuronalen Netzes (NN) gewichtende Gewichtsmatrix (A) umfassen,
**dass** die markierten Gewichte eine durch das digitale Wasserzeichen (WM) markierte Gewichtsmatrix (A') umfassen, und dass die Kompensationsgewichte eine Kompensationsmatrix (D) umfassen, mittels der die selektierte Gewichtsmatrix (A) aus der markierten Gewichtsmatrix (A') rekonstruierbar ist.

5. Verfahren nach einem der vorhergehenden Ansprüche, **dadurch gekennzeichnet,**
**dass** zur Verschlüsselung der Kompensationsgewichte (D) ein der Steuereinrichtung (CTL, U1) zugeordneter öffentlicher Schlüssel (K1) verwendet wird, und
**dass** zur Entschlüsselung der verschlüsselten Kompensationsgewichte (D') ein der Steuereinrichtung (CTL, U1) zugeordneter privater Schlüssel (K2) verwendet wird.

6. Verfahren nach einem der vorhergehenden Ansprüche, **dadurch gekennzeichnet,**
**dass** die Entschlüsselung der verschlüsselten Kompensationsgewichte (D') mittels eines Trusted-Platform-Moduls (TPM) der Steuereinrichtung (CTL, U1) erfolgt.

7. Verfahren nach einem der vorhergehenden Ansprüche, **dadurch gekennzeichnet,**
**dass** das neuronale Netz (NN) mit den markierten Gewichten (A') und den verschlüsselten Kompensationsgewichten (D') in einem Softwarecontainer (SC) gekapselt wird.

8. Schutzsystem zum Diebstahlsschutz eines zum Steuern einer Maschine (M) vorgesehenen neuronalen Netzes (NN), eingerichtet zum Ausführen aller Verfahrensschritte eines Verfahrens nach einem der vorhergehenden Ansprüche.

9. Computerprogrammprodukt eingerichtet zum Ausführen eines Verfahrens nach einem der Ansprüche 1 bis 7.

10. Computerlesbares Speichermedium mit einem Computerprogrammprodukt nach Anspruch 9.
